(19)

Europäisches
Patentamt
European
Patent Office
Office européen
des brevets

(11)  **EP 4 507 041 A1**

(12)  **EUROPEAN PATENT APPLICATION**
published in accordance with Art. 153(4) EPC

(43) Date of publication:
**12.02.2025  Bulletin 2025/07**

(21) Application number: **22936816.2**

(22) Date of filing: **12.04.2022**

(51) International Patent Classification (IPC):
**H01M 10/04** (2006.01)    **H01M 50/107** (2021.01)
**H01M 50/586** (2021.01)    **H01M 50/593** (2021.01)

(52) Cooperative Patent Classification (CPC):
**H01M 10/04; H01M 50/107; H01M 50/586;
H01M 50/593; Y02E 60/10**

(86) International application number:
**PCT/CN2022/086391**

(87) International publication number:
**WO 2023/197162 (19.10.2023 Gazette 2023/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Contemporary Amperex Technology
Co., Limited
Ningde, Fujian 352100 (CN)**

(72) Inventors:
• **BAI, Lulu
Ningde, Fujian 352100 (CN)**

• **WU, Ningsheng
Ningde, Fujian 352100 (CN)**
• **ZHENG, Ting
Ningde, Fujian 352100 (CN)**
• **CHEN, Xinxiang
Ningde, Fujian 352100 (CN)**
• **ZHENG, Yulian
Ningde, Fujian 352100 (CN)**
• **LI, Quankun
Ningde, Fujian 352100 (CN)**

(74) Representative: **Behr, Wolfgang
Lorenz Seidler Gossel
Rechtsanwälte Patentanwälte
Partnerschaft mbB
Widenmayerstraße 23
80538 München (DE)**

(54)    **BATTERY CELL, BATTERY AND ELECTRIC DEVICE**

(57)    Provided in the present application are a battery cell, a battery and an electric device, which relates to the technical field of batteries The battery cell comprises a housing, an electrode assembly, a first insulating member and a second insulating member, wherein the inner surface of a bottom wall of the housing is connected to the inner surface of a first side wall by means of a first arc transition surface; a first partition portion of the first insulating member separates the electrode assembly and the first side wall; the second insulating member separates the electrode assembly and the bottom wall; in the thickness direction of the second insulating member, an isolation film of the electrode assembly is provided with a stacking portion located between an electrode sheet and the second insulating member; and the radius R1 of the first circular arc transition surface, the thickness a1 of the first partition portion, the thickness b of the stacking portion and the thickness c of the second insulating member satisfy $R1 \leq (c+b)^2 + 4(a1)^2 + [(a1)*(c+b)]^{1/2}$, such that the electrode sheet of the electrode assembly is prevented from being wrinkled due to the interference of the electrode sheet of the electrode assembly and the first arc transition surface, thereby reducing the risk of short circuiting of the battery cell caused by wrinkling due to the interference of the electrode sheet and the first arc transition surface.

FIG. 4

**Description**

**Technical Field**

The present application relates to the technical field of batteries, and in particular, to a battery cell, a battery and an electric device.

**Background Art**

At present, with the rapid development of smart phones, tablet computers, and electric vehicles, the application of lithium-ion batteries is also becoming more and more widespread, so higher requirements are also put forward for lithium-ion batteries. For example, batteries are required to have better safety performance, and internal short circuit of batteries is one of the main reasons of electrical safety problems.

A short circuit in the battery will generate excessive electric heat and high temperature, which may cause a fire or burn out electrical appliances, posing a threat to property and life safety. Hence, how to reduce the risk of short circuit of the battery is an urgent problem to be solved in the technical field of batteries.

**Summary**

Embodiments of the present application provide a battery cell, a battery and an electric device, to reduce the risk of short circuit of a battery.

In a first aspect, embodiments of the present application provide a battery cell, including a casing, an electrode assembly, a first insulating member, and a second insulating member, where the casing includes a bottom wall and first side walls connected to the bottom wall, the inner surface of the bottom wall is connected with the inner surface of each of the first side walls through a first circular arc transition surface; the electrode assembly is accommodated in the casing, and the electrode assembly includes electrode plates and a separator; the first insulating member includes first partition portions, the first partition portions are configured to separate the electrode assembly and the first side walls; the second insulating member is configured to separate the electrode assembly and the bottom wall; in the thickness direction of the second insulating member, the separator has a stacked part located between the electrode plate and the second insulating member, and the radius R1 of the first circular arc transition surface, the thickness a1 of each of the first partition portions, the thickness b of the stacked part, and the thickness c of the second insulating member satisfy the following relationship:

$$R1 \leq (c+b)^2 + 4*(a1)^2 + [(a1)*(c+b)]^{1/2}.$$

In the above technical solution, the first insulating member is configured to separate the bottom wall of the casing and the electrode assembly, so in the thickness direction of the bottom wall, the first insulating member is disposed between the bottom wall and the electrode assembly, which can not only separate the electrode assembly and the bottom wall to prevent the battery cell from short-circuiting, but also raise the position of the electrode assembly relative to the bottom wall of the casing; and the radius R1 of the first circular arc transition surface, the thickness a1 of the first partition portion, the thickness b of the stacked part, and the thickness c of the second insulating member satisfy: $R1 \leq (c+b)^2 + 4*(a1)^2 + [(a1)*(c+b)]^{1/2}$, to prevent the electrode plate of the electrode assembly from interfering with the first circular arc transition surface which results in wrinkling of the electrode plate of the electrode assembly, and thus reduce the risk that the squeezing/pressing between the electrode plate and the first circular arc transition surface causes wrinkling of the electrode plate and thus the short circuit of the battery cell, improving the safety performance of the battery cell.

In some embodiments of the first aspect of the present application, the casing includes two first side walls arranged opposite to each other in a first direction, and the first insulating member includes two first partition portions arranged opposite to each other in the first direction, where each first partition portion is configured to separate the electrode assembly and one of the first side walls, and the thickness direction of the second insulating member is perpendicular to the first direction.

In the above technical solution, each first circular arc transition surface between the corresponding first side wall and the bottom wall satisfies: $R1 \leq (c+b)^2 + 4*(a1)^2 + [(a1)*(c+b)]^{1/2}$, so the electrode plates at two sides of the electrode assembly in the first direction both do not interfere with the first circular arc transition surfaces to result in wrinkling of the electrode plates of the electrode assembly, thus reducing the risk that the squeezing between each electrode plate and the corresponding first circular arc transition surface causes wrinkling of the electrode plate and thus the short circuit of the battery cell, improving the safety performance of the battery cell. The two first partition portions independently separate the two first side walls and the electrode assembly respectively, which can provide better insulation between the first side walls and the electrode assembly.

In some embodiments of the first aspect of the present application, the casing further includes second side walls connected to the bottom wall and adjacent to the first side walls, and the inner surface of the bottom wall is connected with the inner surface of each of the second side walls by a second circular arc transition surface; the first insulating member further includes two first insulating parts, and the two first insulating parts at least partially overlap to separate the second side walls and the electrode assembly, where the radius R2 of the second circular arc transition surface, the thickness $a21$ of each of the first insulating parts, the thickness $b$ of the stacked part, and the thickness $c$ of the second insulating member satisfy the following relationship:

$$R2 \leq (c+b)^2 + 4*(2* a21)^2 + [(2* a21)*(c+b)]^{1/2}.$$

In the above technical solutions, the radius R2 of the second circular arc transition surface, the thickness $a21$ of the first insulating part, the thickness $b$ of the stacked part, and the thickness $c$ of the second insulating member satisfy: $R2 \leq (c+b)^2 + 4*(2*a21)^2 + [(2*a21)*(c+b)]^{1/2}$, preventing the electrode plate of the electrode assembly from interfering with the second circular arc transition surface which results in wrinkling of the electrode plate of the electrode assembly, and thus reducing the risk that the interfering between the electrode plate and the second circular arc transition surface causes wrinkling of the electrode plate and thus the short circuit of the battery cell, improving the safety performance of the battery cell.

In some embodiments of the first aspect of the present application, the two first insulating parts at least partially overlap to form a second partition portion that separates the corresponding second side wall and the electrode assembly, and the first insulating member has two second partition portions; the casing includes two second side walls arranged opposite to each other in a second direction, and the electrode assembly and each of the second side walls are separated by one of the second partition portions, and the thickness direction of the second insulating member is perpendicular to the second direction.

In the above technical solution, each second circular arc transition surface between the corresponding second side wall and the bottom wall satisfies: $R2 \leq (c+b)^2 + 4*(2*a21)^2 + [(2*a21)*(c+b)]^{1/2}$, so the electrode plates at two sides of the electrode assembly in the second direction both do not interfere with the second circular arc transition surfaces to result in wrinkling of the electrode plates of the electrode assembly, thus reducing the risk that the squeezing between each electrode plate and the corresponding second circular arc transition surface causes wrinkling of the electrode plate and thus the short circuit of the battery cell, improving the safety performance of the battery cell. In addition, the two second partition portions independently separate the two second side walls and the electrode assembly respectively, which can provide better insulation between the second side walls and the electrode assembly.

In some embodiments of the first aspect of the present application, the radius R1 of the first circular arc transition surface and the thickness $c$ of the second insulating member satisfy: $0.3 \leq c/R1 \leq 1$, and preferably, $0.35 \leq c/R1 \leq 0.8$.

In the above technical solution, the radius R1 of the first circular arc transition surface and the thickness $c$ of the second insulating member satisfy: $0.3 \leq c/R1 \leq 1$, and preferably, $0.35 \leq c/R1 \leq 0.8$, preventing the electrode plate of the electrode assembly from interfering with the first circular arc transition surface which results in wrinkling of the electrode plate of the electrode assembly, and thus reducing the risk that the squeezing between the electrode plate and the first circular arc transition surface causes wrinkling of the electrode plate and thus the short circuit of the battery cell.

In some embodiments of the first aspect of the present application, the second insulating member includes a second insulating part and at least one foldable part that are stacked in a third direction, and the at least one foldable part is in foldable connection with the second insulating part, and the third direction is consistent with the thickness direction of the second insulating member.

In the above technical solution, the at least one foldable part is in foldable connection with the second insulating part, and the at least one foldable part may be provided to be stacked or not stacked with the second insulating part when being folded relative to the second insulating part. When the at least one foldable part and the second insulating part are provided to be stacked in the third direction, the thickness of the second insulating member is the sum of the thicknesses of the at least one foldable part and the second insulating part that are stacked in sequence in the third direction. When at least one foldable part and the second insulating part are not in a stacked state, the thickness of the second insulating member is the thickness of the second insulating part. Therefore, the thickness of the first insulating member can be adjusted through the at least one foldable part, so that the thickness of the second insulating member can enable the electrode plate to not interfere with the first circular arc transition surface.

In some embodiments of the first aspect of the present application, the second insulating member includes a plurality of foldable parts.

In the above technical solution, the second insulating member includes a plurality of foldable parts, and different number of the foldable parts are stacked with the second insulating part in the third direction, thereby changing the thickness of the first insulating member, so that the thickness of the second insulating member can enable the electrode plate to not interfere with the first circular arc transition surface.

In some embodiments of the first aspect of the present application, in the third direction, some of the plurality of foldable parts are located at one side of the second insulating part, and the others of the plurality of foldable parts are located at the other side of the second insulating part.

In the above technical solution, the plurality of foldable parts are distributed at two sides of the second insulating part in the third direction, which facilitates folding of the foldable parts relative to the second insulating part and reduces the accumulation amount at the connection positions between the foldable parts and the second insulating part.

In some embodiments of the first aspect of the present application, the second insulating member includes two insulating parts, the second insulating part has two first edge portions opposite to each other in the first direction, one ends of the two foldable parts are in foldable connection with the two first edge portions respectively, and the first direction is perpendicular to the thickness direction of the second insulating member.

In the above technical solution, the two foldable parts are in foldable connection with the two first edge portions respectively of the second insulating part opposite to each other in the first direction, facilitating the foldable parts being folded relative to the second insulating part to avoid that the two foldable parts interfere with each other during folding.

In some embodiments of the first aspect of the present application, the first insulating member includes two first partition portions, and the two first partition portions are in foldable connection with the two foldable parts respectively, the first end of each of the foldable parts is in foldable connection with the second insulating part, and the second end, opposite to the first end, of each of the foldable parts is in foldable connection with the corresponding first partition portion.

In the above technical solution, the first insulating member includes two first partition portions that are in foldable connection with the two foldable parts respectively, and the first partition portions and the second insulating part are respectively connected to the second ends and the first ends, opposite to each other, of the foldable parts, facilitating the first partition portions being folded relative to the foldable parts to separate the first sides of the electrode assembly from the casing.

In some embodiments of the first aspect of the present application, the second insulating member includes two foldable parts, the second insulating part has two first edge portions arranged opposite to each other in the first direction, and the two foldable parts are in foldable connection with the two first edge portions respectively; the second insulating part has two second edge portions arranged opposite to each other in the second direction, the first insulating member includes two first partition portions, the two first partition portions are in foldable connection with the two second edge portions respectively, and the first direction is perpendicular to the second direction.

In the above technical solution, the two first partition portions are respectively in foldable connection with the two second edge portions of the second insulating part opposite to each other in the second direction, and the two foldable parts are respectively in foldable connection with the two first edge portion of the second insulating part opposite to each other in the first direction, facilitating reducing the folding difficulty of the foldable parts and reducing the risk that the foldable parts and the first partition portions interfere with each other during folding.

In some embodiments of the first aspect of the present application, the second insulating part includes through holes, and the foldable parts are configured to be stacked with the second insulating part to cover the through holes.

In the above technical solution, during the process of assembling the battery cell, the second insulating member may be positioned through the through holes to realize cooperative positioning with the assembly device for assembling the battery cell, thereby positioning the second insulating member on the assembly device to improve the assembly quality of the battery cell. When the foldable part is in a stacked state relative to the second insulating part, the foldable part can cover the through hole, so that ions of the electrode assembly cannot reach the casing through the through hole, thereby reducing the risk of short circuit inside the battery cell.

In some embodiments of the first aspect of the present application, the first insulating member and the second insulating member are integrally formed.

In the above technical solution, the first insulating member and the second insulating member are integrally formed, facilitating manufacturing.

In some embodiments of the first aspect of the present application, the thickness of the second insulating member is greater than the thickness of the first insulating member.

In the above technical solution, the thickness of the second insulating member is greater than the thickness of the first insulating member, which can both avoid interfering between the electrode plate of the electrode assembly and the first circular arc transition surface which causes wrinkling of the electrode plate of the electrode assembly, and reduce the space inside the casing occupied by the first insulating member.

In a second aspect, embodiments of the present application provide a battery, the battery including at least one battery cell provided by any embodiment of the first aspect.

In the above technical solution, for the battery cell in the embodiment of the first aspect, the risk that the electrode plate of the electrode assembly interferes with the first circular arc transition surface to cause wrinkling of the electrode plate and thereby short circuit of the battery cell is relatively low, and the safety performance of the battery cell is high, thereby improving the safety performance of the battery.

In a third aspect, embodiments of the present application provide an electric device, the electric device including at least one battery cell provided by any embodiment of the first aspect.

In the above technical solution, for the battery cell in the embodiment of the first aspect, the risk that the electrode plate of the electrode assembly interferes with the first circular arc transition surface to cause wrinkling of the electrode plate and thereby short circuit of the battery cell is relatively low, and the safety performance of the battery cell is high, thereby improving the electrical safety of the electric device.

## Brief Description of Drawings

In order to more clearly illustrate the technical solutions of the embodiments of the present application, the drawings that are required to be used in the embodiments will be briefly introduced below. It should be understood that the following drawings only show some embodiments of the present application, and thus should not be regarded as a limitation on the scope, and those skilled in the art can also obtain other related drawings based on these drawings without paying creative work.

FIG. 1 is a schematic structural view of a vehicle provided in some embodiments of the present application;

FIG. 2 is a schematic structural view of s battery provided in some embodiments of the present application;

FIG. 3 is an exploded view of a battery cell provided in some embodiments of the present application;

FIG. 4 is a schematic local view of a battery cell provided in some embodiments of the present application;

FIG. 5 is a schematic local view of a battery cell provided in other embodiments of the present application;

FIG. 6 is a schematic structural view of a casing provided in some embodiments of the present application;

FIG. 7 is a schematic view showing an unfolded state of a first insulating member and a second insulating member provided in some embodiments of the present application;

FIG. 8 is a schematic view of FIG.7, after one foldable part is folded relative to the second insulating part;

FIG. 9 is a schematic view of the insulating members of FIG. 8, after the other foldable part is folded relative to the second insulating part;

FIG. 10 is a schematic view of the second insulating member in FIG. 7 after completely folding;

FIG. 11 is a schematic local view of a battery cell provided in still some embodiments of the present application;

FIG. 12 is a schematic local view of a battery cell provided in yet some embodiments of the present application;

FIG. 13 is a schematic view showing an unfolded state of a first insulating member and a second insulating member provided in other embodiments of the present application;

FIG. 14 is a flow block diagram of a manufacturing method for a battery cell provided in some embodiments of the present application; and

FIG. 15 is a schematic structural view of a battery cell manufacturing device provided in some embodiments of the present application.

Reference signs: 1000-vehicle; 100-battery; 10-box body; 11-installation space; 12-first part; 13-second part; 20-battery cell; 21-casing; 211-opening; 212-bottom wall ; 213-first side wall; 214-first circular arc transition surface; 215-second side wall; 216-second circular arc transition surface; 22-electrode assembly; 221-stacked part; I-flat region; II-bending region; 222-first side surface; 223-second side surface; 23-end cover assembly; 231-end cover; 232-electrode terminal; 233-end cover protective member; 24-protective film; 25-current collector member; 30-first insulating member; 31-first partition portion; 32-first insulating part; 33-second partition portion; 34-first fold; 40-second insulating member; 41-foldable part; 411-first end; 412-second end; 42-second fold; 43-second insulating part; 431-first side; 432-second side; 433-first edge portion; 434-third fold; 435-second edge portion; 436-fourth fold; 437-through hole; 200-controller; 300-motor; 2000-battery cell manufacturing device; 2100-providing device; 2200-assembly device; X-thickness direction of the second insulating member; Y-first direction; Z-second direction.

## Detailed Description of Embodiments

In order to make the purposes, technical solutions and advantages of the embodiments of the present application clearer, the technical solutions in the embodiments of the present application will be clearly and completely described below in conjunction with the drawings in the embodiments of the present application. Obviously, the described embodiments are some, but not all of embodiments of the present application. Generally, the components of the embodiments of the present application described and illustrated in the drawings here may be arranged and designed in a variety of different configurations.

Hence, the following detailed description of the embodiments of the present application provided in the drawings is not intended to limit the scope of the claimed application, but merely represents selected embodiments of the present application. Based on the embodiments in the present application, all other embodiments obtained by persons of ordinary skill in the art without paying creative efforts fall within the protection scope of the present application.

It should be noted that, without conflict, the embodiments in the present application and the features in the embodiments may be combined with each other.

It should be noted that similar reference numerals and letters represent similar items in the following figures, therefore, once an item is defined in one figure, it does not need to be further defined and explained in subsequent figures.

In the description of the embodiments of the present application, it should be indicated that the orientation or positional relationships are based on orientation or positional relationships shown in the drawings, or the orientation or positional relationships in which the product of the present application is commonly placed when in use, or the orientation or positional relationships of the present application commonly understood by those skilled in the art, only for the convenience of describing the present application and simplifying the description, rather than indicating or implying that the device or element referred to must have a specific orientation, or be constructed and operated in a specific orientation, and therefore cannot be understood as a limitation on the present application. In addition, the terms "first", "second", "third", etc. are only used to distinguish descriptions and shall not be understood as indicating or implying importance in relativity.

At present, from the perspective of the development of the market situation, the application of power batteries is becoming more and more extensive. Power batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of power battery application fields, its market demand is also constantly increasing.

The battery cell includes a casing, an electrode assembly, a first insulating member and a second insulating member. The casing has a bottom wall and side walls, and the side walls are arranged along the edge of the bottom wall. The electrode assembly is accommodated in the casing. The first insulating member is used to separate the electrode assembly from the side walls; and the second insulating member is used to separate the electrode assembly from the bottom wall to prevent short circuit of the battery cell.

The inventors found that the inner surface of the bottom wall of the casing is in transition connection with the inner surface of each of the side walls through a circular arc transition surface, and the circular arc transition surface is closer to the inside of the battery cell than the inner surface of the bottom wall and the inner surface of the side wall, such that the electrode assembly interferes with the circular arc transition surface, resulting in that the electrode plate of the electrode assembly is squeezed/pressed by the circular arc transition surface to wrinkle, which further lead to the short circuit of the battery cell.

Based on the above consideration, in order to alleviate the problem of interference between the electrode plate of the electrode assembly and the circular arc transition surface, the inventors designed a battery cell after in-depth researches, in which the casing includes first side walls, and an inner surface of each of the first side walls is in transition connection with the inner surface of the bottom wall through a first circular arc transition surface, the first insulating member includes first partition portions each configured used to separate the electrode assembly from the corresponding first side wall; the second insulating member is configured to separate the electrode assembly from the bottom wall; and the electrode assembly includes electrode plates and a separator, where in the thickness direction of the second insulating member, the separator has a stacked part located between the electrode plate and the second insulating member. The radius R1 of the first circular arc transition surface, the thickness a1 of the first partition portion, the thickness b of the stacked part, and the thickness c of the second insulating member satisfy: $R1 \leq (c+b)^2 + 4*(a1)^2 + [(a1)*(c+b)]^{1/2}$.

The first insulating member is used to separate the bottom wall of the casing from the electrode assembly, so in the thickness direction of the bottom wall, the first insulating member is provided between the bottom wall and the electrode assembly, which not only can separate the electrode assembly from the bottom wall to prevent short circuit of the battery cell. The first insulating member can also raise the position of the electrode assembly relative to the bottom wall of the casing; and the radius R1 of the first circular arc transition surface, the thickness a1 of the first partition portion, the thickness b of the stacked part, and the thickness c of the second insulating member satisfy: $R1 \leq (c+b)^2 + 4*(a1)^2 + [(a1)*(c+b)]^{1/2}$, to prevent the electrode plate of the electrode assembly from interfering with the first circular arc transition surface which results in wrinkling of the electrode plate of the electrode assembly, and thus reduce the risk that the interfering between the electrode plate and the first circular arc transition surface causes wrinkling of the electrode plate and thus the short circuit of the battery cell, improving the safety performance of the battery cell.

The battery cell disclosed in the embodiments of the present application cell may be used in, but not limited to, electric device such as vehicles, ships or aircrafts. The power source system of the electric device may be composed of the battery cell and battery disclosed in the present application, which is conductive to reducing the risk of wrinkling of the electrode plate due to interfering between the electrode plate and the circular arc transition surface, reducing the risk of short circuit inside the battery and thereby improving the safety performance of the battery cell.

The electric device may be vehicle, mobile phone, portable device, laptop, ship, spacecraft, electric toy and electric tool, etc. The vehicle may be fuel vehicle, gas vehicle or new energy vehicle. The new energy vehicle may be pure electric vehicle, hybrid power vehicle or extended range vehicle, etc. The spacecraft includes airplane, rocket, space shuttle and space ship, etc. The electric toy includes fixed or mobile electric toy, for example, game console, electric car toy, electric ship toy and electric airplane toy, etc. The electric tool includes metal cutting electric tool, grinding electric tool, assembly electric tool and railway electric tool, for example, electric drill, electric grinder, electric wrench, electric screwdriver, electric hammer, impact electric drill, concrete vibrator and electric planer, etc. The embodiments of the present application do not specifically limit the above electric device.

In the following embodiments, for convenience of description, description is made by taking, as an example, an electric device being a vehicle.

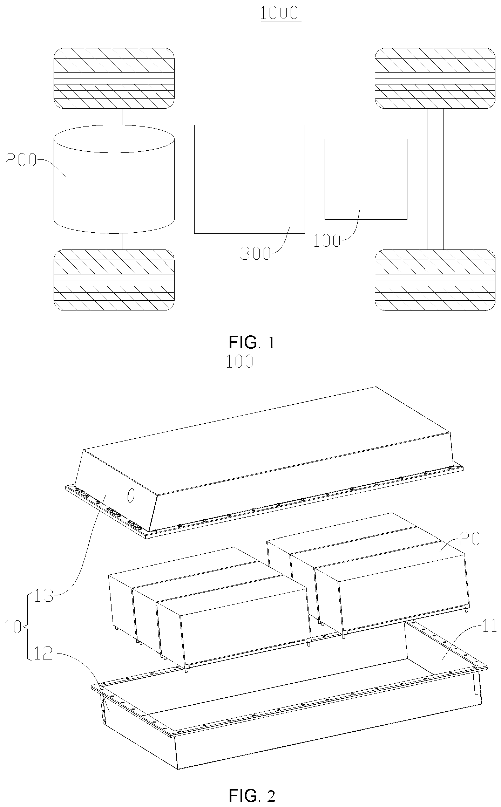

Referring to FIG. 1, a battery 100 is provided inside the vehicle 1000, and the battery 100 may be provided at the bottom, head or tail of the vehicle 1000. The battery 100 may be used for supplying power to the vehicle 1000. For example, the battery 100 may be used as an operating power source of the vehicle 1000.

The vehicle 1000 may further include a controller 200 and a motor 300, the controller 200 being used to control the battery 100 to supply power to the motor 300, for example, for working power requirements during starting, navigating and running of the vehicle 1000.

In some embodiments of the present application, the battery 100 can not only be used as an operating power source for the vehicle 1000, but also be used as a driving power source for the vehicle 1000 to replace or partially replace fuel oil or natural gas to provide driving power for the vehicle 1000.

Referring to FIG. 2, the battery 100 include a box body 10 and battery cells 20, and the battery cells 20 are accommodated in the box body 10.

The box body 10 is used for providing an installation space 11 for the battery cells 20. In some embodiments, the box body 10 may include a first part 12 and a second part 13, the first part 12 and the second part 13 cover each other, to define the installation space 11 for accommodating the battery cells 20. Of course, the joint of the first part 12 and the second part 13 may be sealed by a sealing member (not shown in the drawings), and the sealing member may be a sealing ring, sealant, etc.

The first part 12 and the second part 13 may be in various shapes, such as a cuboid, a cylinder and so on. The first part 12 may be in a hollow structure with one side open to form an accommodation cavity for accommodating the battery cells 20; the second part 13 may also be in a hollow structure with one side open to form an accommodation cavity for accommodating the battery cells 20, and the opening side of the second part 13 cover the opening side of the first part 12, to form the box body 10 having an installation space 11. Certainly, it is possible that the first part 12 is in a hollow structure with one side open to form an accommodation cavity for accommodating the battery cells 20 and the second part 13 is in a plate-shaped structure, and the second part 13 covers the opening side of the first part 12, to form the box body 10 having an installation space 11.

In the battery 100, there may be one or multiple battery cells 20. If there are multiple battery cells 20, the multiple battery cells 20 may be in serial, parallel or hybrid connection with each other. The hybrid connection means that the multiple battery cells 20 are connected with each other both in series and in parallel. The multiple battery cells 20 may be in serial, parallel or hybrid connection with each other, and then the whole composed of the multiple battery cells 20 is accommodated in the box body 10. Certainly, it is possible that the multiple battery cells 20 are first in serial or in parallel or in hybrid connection with each other to form battery 100 modules, and then the multiple battery 100 modules are in serial or in parallel or in hybrid connection with each other to form a whole, and accommodated in the box body 10. The battery cell 20 may be in a shape of cylinder, flat body, cuboid or in other shape, etc. FIG. 2 exemplarily shows the case where the battery cells 20 are each in the shape of cuboid.

In some embodiments, the battery 100 may also include a bus component (not shown in the drawings), and the multiple battery cells 20 may be electrically connected with each other through the bus component, so as to realize serial connection, parallel connection or hybrid connection of multiple battery cells 20.

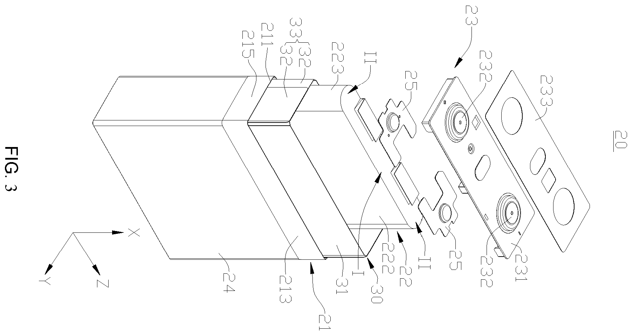

Referring to FIG. 3, the battery cell 20 may include a casing 21, an electrode assembly 22, and an end cover assembly 23. The casing 21 has an opening 211, the electrode assembly 22 is accommodated in the casing 21, and the end cover assembly 23 is used to close the opening 211.

The casing 21 may be in various shapes, such as a cylinder, a cuboid and so on. The shape of the casing 21 may be determined according to the specific shape of the electrode assembly 22. For example, if the electrode assembly 22 is in a cylindrical structure, the casing 21 may be in a cylindrical structure; and if the electrode assembly 22 is in a cuboid structure, the casing 21 may be in a cuboid structure. FIG. 3 exemplarily shows the case where the casing 21 and the electrode assembly 22 are each in the shape of cuboid.

The casing 21 may also be made of various materials, such as copper, iron, aluminum, stainless steel, aluminum alloy, etc., which is not specially limited in this embodiment of the present application.

In some embodiments, the outer surface of the casing 21 is further provided with a protective film 24, and the protective film 24 covers the outer surface of the casing 21. The protective film 24 may play the roles of insulation and high temperature resisting. The protective film 24 may be a blue film.

The electrode assembly 22 may include a positive electrode plate (not shown in the drawings), a negative electrode plate (not shown in the drawings) and a separator (not shown in the drawings). The electrode assembly 22 may be in a winding structure formed by winding the positive electrode plate, the separator and the negative electrode plate, or may be in a stacked structure formed by stacking and arranging the positive electrode plate, the separator and the negative electrode plate. The electrode assembly 22 further includes a positive electrode tab (not shown in the figure) and a negative electrode tab (not shown in the figure), where a positive current collector, in the positive electrode plate, that is not coated with a positive electrode active material layer may be used as the positive electrode tab, and a negative current collector, in the negative electrode plate, that is not coated with a negative electrode active material layer may be used as the negative electrode tab.

The end cover assembly 23 includes an end cover 231 and electrode terminals 232, with the electrode terminals 232 disposed on the end cover 231. The end cover 231 is used to seal the opening 211 of the casing 21 to form a sealed accommodation space (not shown in the drawings), and the accommodation space is used to accommodate the electrode assembly 22. The accommodation space is also used to accommodate an electrolyte, such as electrolytic solution. The end cover assembly 23 serves as a component for outputting electrical energy from the electrode assembly 22. The electrode terminals 232 in the end cover assembly 23 are used to be electrically connected to the electrode assembly 22, that is, the electrode terminal(s) 232 is electrically connected to the tab(s) of the electrode assembly 22. For example, the electrode terminal 232 and the tab are connected through the current collecting member 25 to realize the electrical connection between the electrode terminal 232 and the tab.

It should be noted that there may be one or two opening 211 of the casing 21. If there is one opening 211 of the casing 21, there may be one end cover assembly 23, and the end cover assembly 23 may be provided with two electrode terminals 232, and the two electrode terminals 232 are respectively used to be connected with the positive electrode tab and the negative electrode tab of the electrode assembly 22. The two electrode terminals 232 in the end cover assembly 23 are respectively the positive electrode terminal and the negative electrode terminal. If there are two openings 211 of the casing 21, for example, the two openings 211 are provided at two opposite sides of the casing 21, there may also be two end cover assemblies 23, and the two end cover assemblies 23 cover the two openings of the casing 21 respectively. In this case, the electrode terminal 232 in one end cover assembly 23 may be a positive electrode terminal for being electrically connected with the positive electrode tab of the electrode assembly 22; and the electrode terminal 232 in the other end cover assembly 23 may be a negative electrode terminal for being electrically connected with the negative electrode plate of the electrode assembly 22.

In some embodiments, the end cover assembly 23 further includes an end cover protective member 233, the end cover protective member 233 being installed on the surface of the end cover 231 to protect the end cover 231.

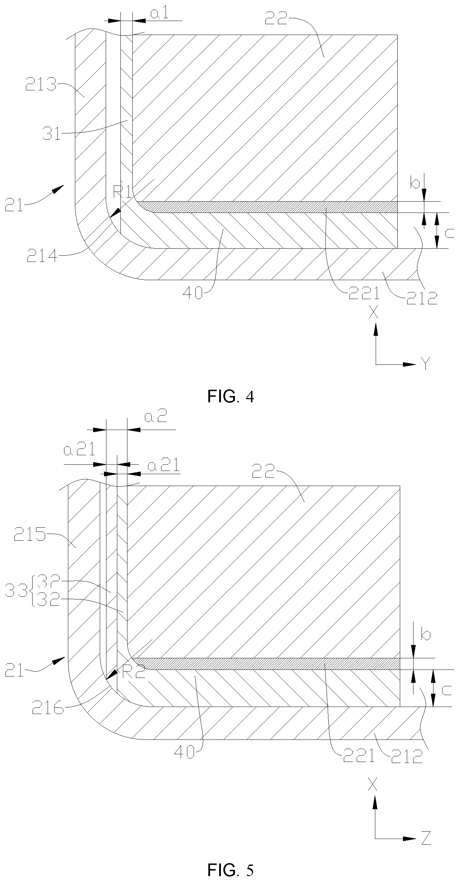

As shown in FIG. 4, in some embodiments, the battery cell 20 includes a casing 21, an electrode assembly 22, a first insulating member 30, and a second insulating member 40, where the casing 21 includes a bottom wall 212 and first side walls 213 connected to the bottom wall 212, the inner surface of the bottom wall 212 is connected with the inner surface of each of the first side walls 213 through a first circular arc transition surface 214; the electrode assembly 22 is accommodated in the casing 21, and the electrode assembly 22 includes electrode plates (not shown in the drawings) and a separator (not shown in the drawings); the first insulating member 30 includes first partition portions 31, the first partition portions 31 are configured to separate the electrode assembly 22 from the first side walls 213; the second insulating member 40 is configured to separate the electrode assembly 22 from the bottom wall 212; in the thickness direction X of the second insulating member, the separator has a stacked part 221 located between the electrode plate and the second insulating member 40, and the radius R1 of the first circular arc transition surface 214, the thickness a1 of each of the first partition portions 31, the thickness b of the stacked part 221, and the thickness c of the second insulating member 40 satisfy the following relationship: $R1 \leq (c+b)^2 + 4(a1)^2 + [(a1)*(c+b)]^{1/2}$.

That the first partition portions 31 are configured to separate the electrode assembly 22 from the first side walls 213 means that the first partition portions 31 are each provided between the corresponding first side wall 213 and the electrode assembly 22, so that the first side wall 213 cannot be in contact with the electrode assembly 22, avoiding short circuit of the battery cell 20 due to the contact between the first side wall 213 and the electrode assembly 22. That the second insulating member 40 is configured to separate the electrode assembly 22 from the bottom wall 212 means that the second insulating member 40 is provided between the bottom wall 212 and the electrode assembly 22, so that the bottom wall 212 cannot be in contact with the electrode assembly 22, avoiding short circuit of the battery cell 20 due to the contact between the bottom wall 212 and the electrode assembly 22.

For the electrode assembly 20, the separator is used to separate the positive electrode plate from the negative electrode plate, to prevent short circuit caused by contact between the positive electrode plate and the negative electrode plate. Therefore, for the winging-type electrode assembly, two ends of the separator in the winding axis direction both extend beyond the electrode plate. In order to reduce the risk of lithium precipitation, generally, the two ends of the negative electrode plate in the winding axis direction extend beyond the positive electrode plate, therefore, the separator extends beyond the electrode plate in the winding axis direction, which may be understood as that the two ends of the separator in the winding axis direction extend beyond the negative electrode plate. When one end of the winding-type electrode assembly in the axial direction abuts against the second insulating member 40, the portion of the separator extending beyond the electrode plate in the winding axis direction is compressed between the electrode plate and the second insulating member 40 to form the stacked part 221. The thickness b of the stacked part 221 is the size of the portion of the separator which extends beyond the electrode plate in the winding axis direction, in the thickness direction of the bottom wall 212 after being compressed by the electrode plate and the second insulating member 40. The thickness direction of the bottom wall 212 is consistent with the thickness direction X of the second insulating member.

In other embodiments, both ends of the separator in the winding axis direction do not extend beyond the electrode plate, so when one end of the winding-type electrode assembly in the axial direction abuts against the second insulating member 40, there is no stacked part 221 between the electrode plate and the second insulating member 40, which may be understood as that the thickness b of the stacked part 221 is 0mm.

For a stacked electrode assembly, the electrode plate has two opposite ends that are not coated by the separator, and the separator extends beyond the two ends of the electrode plate that are not coated by the separator. When one end of the electrode plate of the stacked electrode assembly not coated by the separator abuts against the second insulating member 40, the portion of the separator extending beyond the electrode plate is compressed between the electrode plate and the second insulating member 40 to form the stacked part 221. The thickness b of the stacked part 221 is the size of the portion of the separator which extends beyond the electrode plate in the winding axis direction, in the thickness direction of the bottom wall 212 after being compressed by the electrode plate and the second insulating member 40.

In other embodiments, the separator does not go beyond the two ends of the electrode plate not coated by the separator, so when one end of the electrode plate of the stacked electrode assembly 22 not coated by the separator abuts against the second insulating member 40, there is no stacked part 221 between the electrode plate and the second insulating member 40, which may be understood as that the thickness b of the stacked part 221 is 0mm.

If the first partition portion 31 is in a circular arc structure, the thickness a1 of the first partition portion 31 is the size of the first partition portion 31 in the radial direction. If the first partition portion 31 is in a flat plate structure, the thickness a1 of the first partition portion 31 is the size of the first partition portion 31 in a direction perpendicular to a plane where the first partition portion 31 is located.

In some embodiments, the battery cell 20 may not include the first partition portion 31, which may be understood as that the thickness a1 of the first partition portion 31 is 0mm.

The thickness c of the second insulating member 40 is the size of the second insulating member 40 in the thickness direction of the bottom wall 212.

The first insulating member 30 is used to separate the bottom wall 212 of the casing 21 from the electrode assembly 22, so in the thickness direction of the bottom wall 212, the first insulating member 30 is disposed between the bottom wall 212 and the electrode assembly 22, which can not only separate the electrode assembly 22 from the bottom wall 212 to avoid short circuit of the battery cells 20. The first insulating member 30 can also raise the position of the electrode assembly 22 relative to the bottom wall 212 of the casing 21; and the radius R1 of the first circular arc transition surface 214, the thickness a1 of the first partition portion 31, the thickness b of the stacked part 221, and the thickness c of the second insulating member 40 satisfy: $R1 \leq (c+b)^2 + 4*(a1)^2 + [(a1)*(c+b)]^{1/2}$, to prevent the electrode plate of the electrode assembly 22 from interfering with the first circular arc transition surface 214 which results in wrinkling of the electrode plate of the electrode assembly 22, and thus reduce the risk that the interfering between the electrode plate and the first circular arc transition surface 214 causes wrinkling of the electrode plate and thus the short circuit of the battery cell 20, improving the safety performance of the battery cell 20.

That the electrode plate interferes with the first circular arc transition surface 214 means that the first circular arc transition surface 214 squeezes/presses the electrode plate.

As shown in FIG. 5 to FIG. 10, in some embodiments, in some embodiments, the casing 21 includes two first side walls 213 arranged oppositely in the first direction Y, and the first insulating member 30 includes two first partition portions 31 arranged oppositely in the first direction Y. Each first partition portion 31 is used to separate the electrode assembly 22 from one of the first side walls 213. The thickness direction X of the second insulating member is perpendicular to the first direction Y.

The first direction Y is parallel to the plane of the second insulating member 40 facing the electrode assembly 22.

The first circular arc transition surface 214 between each first side wall 213 and the bottom wall 212 satisfies: $R1 \leq (c+b)^2 + 4*(a1)^2 + [(a1)*(c+b)]^{1/2}$, so the electrode plates at two sides of the electrode assembly 22 in the first direction Y both do not interfere with the first circular arc transition surfaces 214 which results in wrinkling of the electrode plates of the electrode assembly 22, thus reducing the risk that the squeezing between each electrode plate and the corresponding first circular arc transition surface 214 causes wrinkling of the electrode plate to cause the short circuit of the battery cell 20, improving the safety performance of the battery cell 20. The two first partition portions 31 independently separate the two first side walls 213 from the electrode assembly 22 respectively, which can provide better insulation between the first side walls 213 and the electrode assembly 22.

As shown in FIG. 5, in some embodiments, the casing 21 further includes second side walls 215 connected to the bottom wall 212 and adjacent to the first side walls 213, and the inner surface of the bottom wall 212 is connected with the inner surface of each of the second side walls 215 by a second circular arc transition surface 216; the first insulating member 30 further includes two first insulating parts 32, and the two first insulating parts 32 at least partially overlap to separate the second side walls 215 from the electrode assembly 22, where the radius R2 of the second circular arc transition surface 216, the thickness a21 of each of the first insulating parts 32, the thickness b of the stacked part 221, and the thickness c of the second insulating member 40 satisfy the following relationship: $R2 \leq (c+b)^2 + 4*(2*a21)^2 + [(2*a21)*(c+b)]^{1/2}$.

The first side walls 213 are adjacent to and connected with the second side walls 215. In the embodiment where the casing 21 is rectangular, the first side walls 213 are perpendicular to the second side walls 215, and both the first side wall 213 and the second side wall 215 are perpendicular to the bottom wall 212.

The two first insulating parts 32 at least partially overlap to form a second partition portion 33 that separates the second side walls 215 from the electrode assembly 22. The second partition portion 33 is provided between the second side walls 215 and the electrode assembly 22, so that second side walls 215 cannot be in contact with the electrode assembly 22, avoiding short circuit of the battery cell 20 due to the contact between the battery assembly 22 and the second side walls 215. The thickness a21 of the first insulating part 32 is the size of the first insulating part 32 in the overlapping direction of the two first insulating parts 32. The radius R2 of the second circular arc transition surface 216 and the thickness a2 of the second partition portion 33 satisfy: $R2 \leq (c+b)^2 + 4(a2)^2 + [(a2)*(c+b)]^{1/2}$. The thickness a2 of the second partition portion 33 is the thickness of the overlapping region of the two first insulating parts 32, that is, $a2 = 2*a21$. Therefore, the radius R of the second circular arc transition surface 216 satisfies: $R2 \leq (c+b)^2 + 4*(2*a21)^2 + [(2*a21)*(c+b)]^{1/2}$.

In some other embodiments, the second side walls 215 and the electrode assembly 22 are separated by only one first insulating part 32, or the second side walls 215 and the electrode assembly 22 are separated by two first insulating parts 32, but the two first insulating parts 32 do not overlap, so the radius R of the second circular arc transition surface 216 satisfies: $R2 \leq (c+b)^2 + 4(a21)^2 + [(a21)*(c+b)]^{1/2}$.

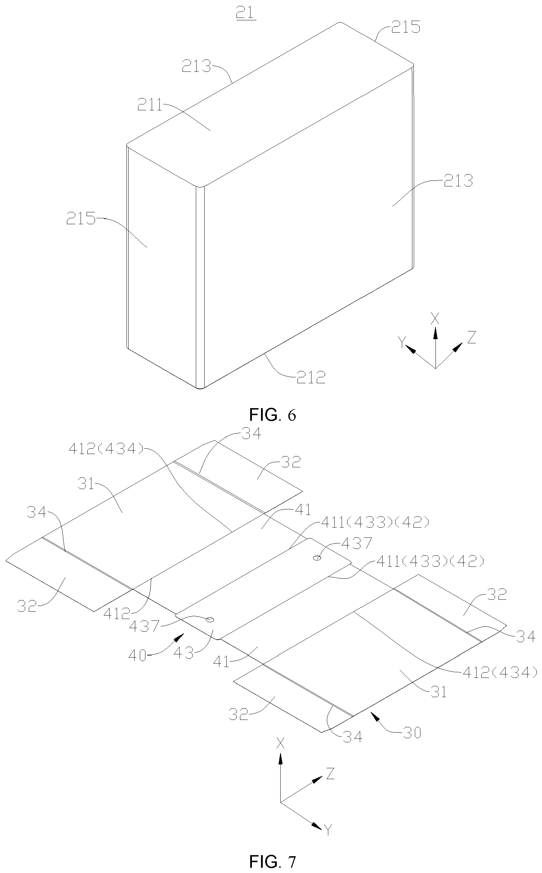

In some embodiments, the two first insulating parts 32 are in foldable connection with the first partition portions 31 respectively. The first insulating part 32 can be folded relative to the first partition portion 31 to change the included angle thereof with the first partition portion 31, so that the first insulating part 32 can be located between the second side wall 215 and the electrode assembly 22. FIG. 7 to FIG. 10 show the cases where the first insulating parts 32 are in foldable connection with the first partition portions 31. A first fold 34 is formed between the first insulating part 32 and the first partition portion 31, and the first insulating part 32 can be rotated and folded around the first fold 34, relative to the first partition portion 31, to make the first insulating part 32 located between the second side wall 215 and the electrode assembly 22. When the first insulating part 32 is located between the second side wall 215 and the electrode assembly 22, the first fold 34 extends in the thickness direction X of the second insulating member.

In other embodiments, the first insulating part 32 may be arranged at an angle with the first partition portion 31, and the first insulating part 32 may be located between the second side wall 215 and the electrode assembly 22, without being folded relative to the first partition portion 31. For example, in an embodiment in which the first side wall 213 is perpendicular to the second side wall 215, the first insulating part 32 is connected to one end of the first partition portion 31 in the second direction Z and is arranged perpendicular to the first partition portion 31.

In some other embodiments, the first insulating part 32 and the first partition portion 31 may also be provided separately.

The two first insulating parts 32 that form one second partition portion 33 after overlapping are respectively located at the same ends of the two first partition portions 31 in the second direction Z. Any two of the thickness direction X of the second insulating member, the first direction Y and the second direction Z are perpendicular to each other.

The first partition portion 31 and the first insulating part 32 may be integrally formed, or may be provided separately and then connected to form an integral structure.

The radius R2 of the second circular arc transition surface 216, the thickness a21 of the first insulating part 32, the thickness b of the stacked part 221, and the thickness c of the second insulating member 40 satisfy: $R2 \leq (c+b)^2 + 4(2*a21)^2 + [(2*a21)*(c+b)]^{1/2}$, avoiding that the electrode plate of the electrode assembly 22 interferes with the second circular arc transition surface 216 which results in wrinkling of the electrode plate of the electrode assembly 22, and thus reducing the risk that the interfering between the electrode plate and the second circular arc transition surface 216 causes wrinkling of the electrode plate and thereby the short circuit of the battery cell 20, and improving the safety performance of the battery cell 20.

That the electrode plate interferes with the second circular arc transition surface 216 means that second circular arc transition surface 216 presses the electrode plate.

Continuing to refer to FIG. 6 to FIG. 10, in some embodiments, the two first insulating parts 32 at least partially overlap to form a second partition portion 33 that separates the corresponding second side wall 215 from the electrode assembly 22, and the first insulating member 30 has two second partition portions 33; the casing 21 includes two second side walls 215 arranged opposite to each other in a second direction Z, and the electrode assembly 22 and each of the second side walls 215 are separated by one second partition portion 33, and the thickness direction X of the second insulating member is perpendicular to the second direction Z.

The first insulating member 30 has two second partition portions 33, then the first insulating member 30 has four first insulating parts 32, and two first insulating parts 32 of the four first insulating parts 32 are connected to two ends of one first partition portions 31 in the second direction Z, and the other two first insulating parts 32 of the four first insulating parts 32 are connected to two ends of the other first partition portion 31 in the second direction Z.

For a square winding-type electrode assembly 22, the electrode assembly 22 has a flat region I and bending regions II connected to two ends of the flat region I. The flat region I has two opposite first side surfaces 222, and the outer side surface of each bending region II is an arc second side surface 223. In the above, if the first partition portion 31 is used to separate the first side surface 222 from the first side wall 213, the second partition portion 33 is used to separate the second side surface 223 from the second side wall 215; and if the second partition portion 33 is used to separate the first side surface 222 from the first side wall 213, the first partition portion 31 is used to separate the second side surface 223 from the second side wall 215. Embodiments of the present application shows cases where the first side surface 222 and the first side wall 213 are arranged oppositely and the first partition portion 31 is used to separate the first side surface 222 from the first side wall 213; and where the second side surface 223 and the second side wall are arranged oppositely and the second partition portion is used to separate the second side surface 223 from second side wall 215.

The second circular arc transition surface 216 between each second side wall 215 and the bottom wall 213 satisfies: $R2 \leq (c+b)^2 + 4*(2*a21)^2 + [(2*a21)*(c+b)]^{1/2}$, so the electrode plates at two sides of the electrode assembly 22 in the second direction Z both do not interfere with the second circular arc transition surfaces 216 to result in wrinkling of the electrode plates of the electrode assembly 22, thus reducing the risk that the squeezing between each electrode plate and the corresponding second circular arc transition surface 216 causes wrinkling of the electrode plate and thus the short circuit of the battery cell 20, improving the safety performance of the battery cell 20. In addition, the two second partition portions 33 independently separate the two second side walls 215 from the electrode assembly 22 respectively, which can provide better insulation between the second side walls 215 and the electrode assembly 22.

In some embodiments, the radius R1 of each first circular arc transition surface 214 and the thickness c of second insulating member 40 satisfy: $0.3 \leq c/R1 \leq 1$, and preferably, $0.35 \leq c/R1 \leq 0.8$. And/or, the radius R2 of each second circular arc transition surface 216 and the thickness c of second insulating member 40 satisfy: $0.3 \leq c/R2 \leq 1$, and preferably, $0.35 \leq c/R2 \leq 0.8$.

The radius R1 of the first circular arc transition surface 214, the radius R2 of the second circular arc transition surface 216 and the thickness c of the second insulating member 40 may have different values, to satisfy $0.3 \leq c/R1 \leq 1$ and $0.3 \leq c/R2 \leq 1$. In the above, c/R1 may be equal to or not equal to c/R2.

Exemplarily, for the radius R1 of the first circular arc transition surface 214 and the thickness c of the second insulating member 40, if the radius R1 of the first circular arc transition surface 214 satisfies $2.1\,mm \leq R1 \leq 2.5\,mm$, the thickness c of the second insulating member 40 may satisfy: $1.2mm \leq c \leq 1.5mm$; if the radius R1 of the first circular arc transition surface 214 satisfies $1.3mm \leq R1 \leq 2.0mm$, the thickness c of the second insulating member 40 may satisfy: $0.8mm \leq c \leq 1.3mm$; if the radius R1 of the first circular arc transition surface 214 satisfies $0.8mm \leq R1 \leq 1.2mm$, the thickness c of the second insulating member 40 may satisfy: $0.35mm \leq c \leq 0.55mm$; and if the radius R1 of the first circular arc transition surface 214 satisfies $0.3mm \leq R1 \leq 0.7mm$, the thickness c of the second insulating member 40 may satisfy: $0.05mm \leq c \leq 0.3mm$.

For the radius R2 of the second circular arc transition surface 216 and the thickness c of the second insulating member 40, if the radius R2 of the second circular arc transition surface 216 satisfies $2.1\,mm \leq R1 \leq 2.5\,mm$, the thickness c of the second insulating member 40 may satisfy: $1.2mm \leq c \leq 1.5mm$; if the radius R2 of the second circular arc transition surface 216 satisfies $1.3mm \leq R1 \leq 2.0mm$, the thickness c of the second insulating member 40 may satisfy: $0.8mm \leq c \leq 1.3mm$; if the radius R2 of the second circular arc transition surface 216 satisfies $0.8mm \leq R1 \leq 1.2mm$, the thickness c of the second insulating member 40 may satisfy: $0.35mm \leq c \leq 0.55mm$; and if the radius R2 of the second circular arc transition surface 216 satisfies $0.3mm \leq R1 \leq 0.7mm$, the thickness c of the second insulating member 40 may

satisfy: $0.05mm \leq c \leq 0.3mm$.

The radius R1 of the first circular arc transition surface 214 and the thickness c of the second insulating member 40 satisfy: $0.3 \leq c/R1 \leq 1$, and preferably, $0.35 \leq c/R1 \leq 0.8$, avoiding that the electrode plate of the electrode assembly 22 interferes with the first circular arc transition surface 214 which results in wrinkling of the electrode plate of the electrode assembly 22, and thus reducing the risk that the squeezing between the electrode plate and the first circular arc transition surface 214 causes wrinkling of the electrode plate and thus the short circuit of the battery cell 20. The radius R2 of the second circular arc transition surface 216 and the thickness c of the second insulating member 40 satisfy: $0.3 \leq c/R2 \leq 1$, and preferably, $0.35 \leq c/R2 \leq 0.8$, avoiding that the electrode plate of the electrode assembly 22 interferes with the second circular arc transition surface 216 which results in wrinkling of the electrode plate of the electrode assembly 22, and thus reducing the risk that the squeezing between the electrode plate and the first circular arc transition surface 216 causes wrinkling of the electrode plate and thus the short circuit of the battery cell 20.

Referring to FIG. 7 to FIG. 10, in some embodiments, the second insulating member 40 includes a second insulating part 43 and foldable parts 41 that are stacked in a third direction, and the foldable parts 41 are in foldable connection with the second insulating part 43, and the third direction is consistent with the thickness direction X of the second insulating member.

The third direction is also consistent with the thickness direction of the bottom wall 212.

That the foldable parts 41 are in foldable connection with the second insulating part 43 means that each of the foldable parts 41 may be rotated and folded around a certain fold relative to the second insulating part 43. The foldable parts 41 are folded relative to the second insulating part 43, so that the second insulating part 43 and the foldable parts 41 are in a stacked state and an unfolded state. The stacked state refers to that the foldable parts 41 and the second insulating part 43 are both located between the electrode assembly 22 and the bottom wall 212, and the foldable parts 41 are located at one side of the second insulating part 43 away from the electrode assembly 22 and/or located at one side of the second insulating part 43 facing the electrode assembly 22. The unfolded state refers to other state of the foldable parts 41 and the second insulating part 43 except for the stacked state, including a state in which the foldable parts 41 and the second insulating part 43 are coplanar.

The foldable parts 41 are in foldable connection with the second insulating part 43, and the foldable parts 41 may be provided to be stacked or not stacked with the second insulating part 43 when being folded relative to the second insulating part 43. When the foldable parts 41 and the second insulating part 43 are provided to be stacked in the third direction, the thickness of the second insulating member 40 is the sum of the thicknesses of the foldable parts 41 and the second insulating part 43 that are stacked in sequence in the third direction. When the foldable parts 41 and the second insulating part 43 are not in a stacked state, the thickness of the second insulating member 40 is the thickness of the second insulating part 43. Therefore, the thickness of the first insulating member 30 can be adjusted through the foldable parts 41, so that the thickness of the second insulating member 40 can enable the electrode plate to not interfere with the first circular arc transition surface 214.

The number of the foldable part 41 may be one or multiple. In some embodiments, the second insulating member 40 includes a plurality of foldable parts 41.

"Multiple" refers to two or more than two. The multiple foldable parts may all be in the state of being stacked with the second insulating part 43. Alternatively, some foldable parts 41 of the multiple foldable parts 41 are in the state of being stacked with the second insulating part 43, and the others of the foldable parts 41 and the second insulating part 43 are in the unfolded state. Alternatively, the multiple foldable parts 41 may all be in the unfolded state with the second insulating part 43. The thickness c of the second insulating member 40 is the sum of the thicknesses of the foldable part 41 and the second insulating part 43 located between the electrode assembly 22 and the bottom wall 212 in the thickness direction of the bottom wall 212 and provided in a stacked way. The thickness direction of the bottom wall 212 is consistent with the thickness direction X of the second insulating member and the third direction.

The second insulating member 40 includes a plurality of foldable parts 41, and different numbers of the foldable parts 41 are stacked with the second insulating part 43 in the third direction, thereby changing the thickness of the first insulating member 30, so that the thickness of the second insulating member 40 can enable the electrode plate to not interfere with the first circular arc transition surface 214.

In some embodiments, in the third direction, some of the multiple foldable parts 41 are located at one side of the second insulating part 43, and the others of the multiple foldable parts 41 are located at the other side of the second insulating part 43.

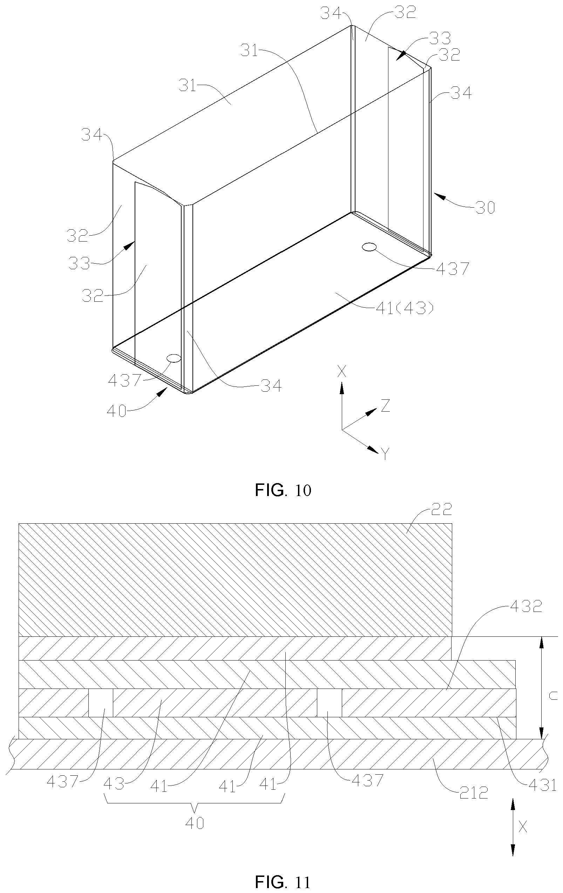

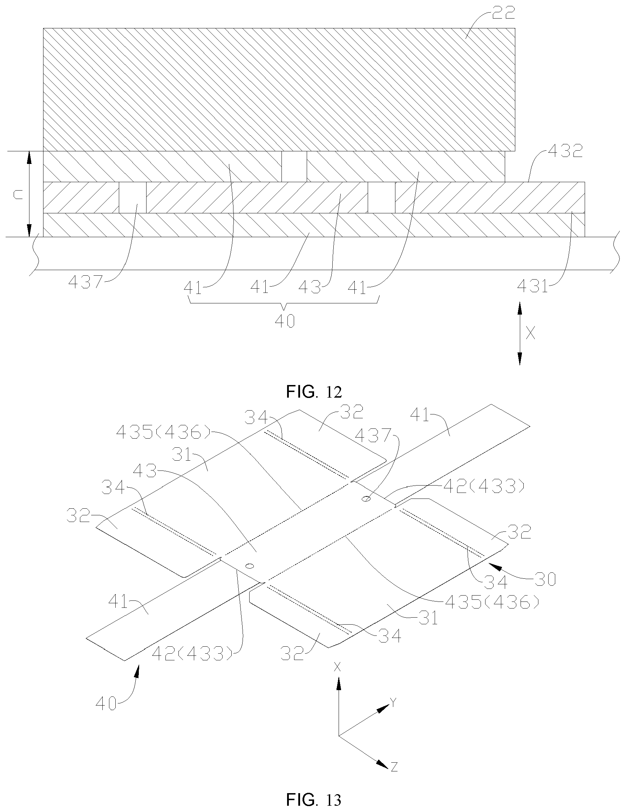

The multiple foldable parts 41 are distributed at two sides of the second insulating part 43 in the third direction. All foldable parts 41 located at the same side of the second insulating part 43 may be arranged in a stacked way or may be arranged side by side. For example, the second insulating member 40 has three foldable parts 41, and one foldable part 41 of the three foldable parts 41 is stacked with the second insulating part 43 at the first side 431 of the second insulating part 43 in the third direction, the other two foldable parts 41 of the three foldable parts 41 are stacked with the second insulating part 43 at the second side 432 of the second insulating part 43 in the third direction, and the first side 431 and the second side 432 are provided opposite to each other. In the above, as shown in FIG. 11, the two foldable parts 41 located at the second side 432 may be stacked in the third direction, and one of the two foldable parts 41 is closer to the electrode assembly 22 than the other. In this embodiment, the thickness c of the second insulating member 40 is the sum of the thickness of one foldable part 41 located at the first side 431 of the second insulating part 43, the thicknesses of the two foldable parts 41 located on the second side 432 of the second insulating part 43 and the thickness of the second insulating part 43. In other embodiments, as shown in FIG. 12, the two foldable parts 41 located at the second side 432 may be arranged side by side at the second side 432, and distances from the two foldable parts 41 to the electrode assembly 22 are same. In this embodiment, the thickness c of the second insulating member 40 is the sum of the thickness of one foldable part 41 located at the first side 431 of the second insulating part 43, the thickness of one foldable part 41 located at the second side 432 of the second insulating part 43 and the thickness of the second insulating part 43.

In other embodiments, all foldable parts 41 may be located at the same side of the second insulating part 43 in the third direction.

The multiple foldable parts 41 are distributed at two opposite sides of the second insulating part 43 in the third direction, which facilitates folding of the foldable parts 41 relative to the second insulating part 43 and reduces the accumulation amount at the connection positions of the foldable parts 41 and the second insulating part 43.

Continuing to refer to FIG. 7 to FIG. 10, in some embodiments, the second insulating member 40 includes two foldable parts 41, the second insulating part 43 has two first edge portions 433 arranged oppositely in the first direction Y, one ends of the two foldable parts 41 are in foldable connection with the two first edge portions 433 respectively, and the first direction Y is perpendicular to the thickness direction X of the second insulating member.

That the two foldable parts 41 are in foldable connection with the two first edge portions 433 respectively means that in the case where the foldable parts 41 are provided to be stacked with the second insulating part 43, the ends of the foldable parts 41 in the first direction Y are connected with the first edge portions 433.

A second fold 42 is formed at the connection position of the foldable part 41 and the first edge portion 433, and the second fold 42 extends in the second direction Z. The foldable part 41 may be rotated and folded around the second fold 42, relative to the second insulating part 43, to be stacked with the second insulating part 43 in the third direction or be in an unfolded state relative to the second insulating part 43. The second fold 42 may be formed at the connection position of the foldable part 41 and the first edge portion 433. Certainly, the second fold 42 may also be provided at other position of the second insulating member 40.

The distance between the second circular arc transition surface 216 and one end of the foldable part 41 close to the second circular arc transition surface 216 in the second direction Z is greater than the distance between the second circular arc transition surface 216 and one end of the second insulating part 43 close to the second circular arc transition surface 216 in the second direction Z, with the foldable part being located at one side of the second insulating part 43 away from the electrode assembly 22, so the foldable part located at the side of the second insulating part 43 away from the electrode assembly 22 enables the end of the second insulating part 43 close to the second circular arc transition surface 216 in the second direction Z to be suspended, to avoid the contact and squeezing between the second insulating part 43 and the second circular arc transition surface 216 which causes the electrode plate to be pressed and wrinkled.

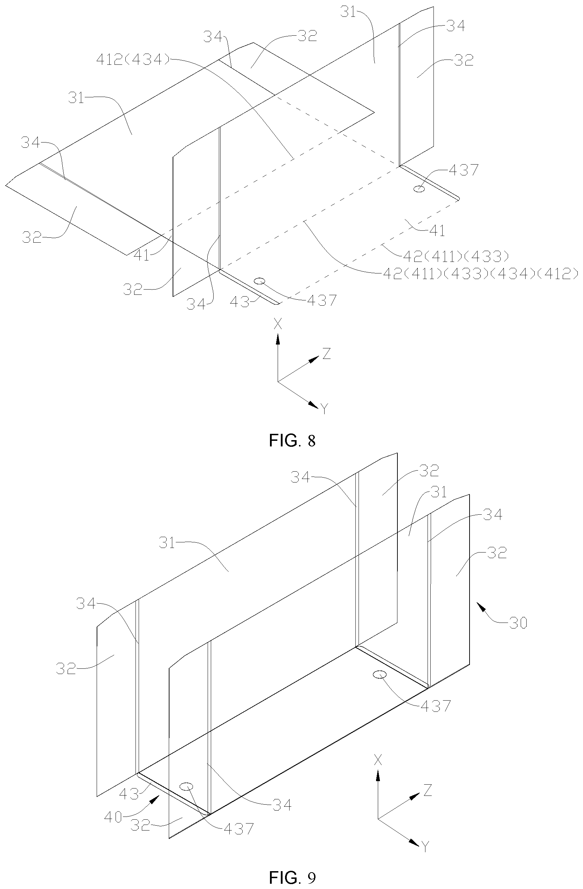

In this embodiment, in order to make the two foldable parts 41 respectively located at two sides of the second insulating part 43 in the third direction, the folding directions of the two foldable parts 41 relative to the second insulating part 43 are opposite. As shown in FIG. 8, one foldable part 41 of the two foldable parts 41 is located at one side of the second insulating part 43 in the third direction after being folded relative to the second insulating part 43 in the first folding direction. As shown in FIG. 9, the other foldable part 41 of the two foldable parts 41 is located at the other side of the first insulating part 32 in the third direction after being folded relative to the second insulating part 43 in the second folding direction. The first folding direction and the second folding direction are opposite. For example, the first folding direction is a clockwise direction and the second folding direction is a counterclockwise direction.

Certainly, the two foldable parts 41 may also be in foldable connection with the same first edge portion 433.

The two foldable parts 41 are respectively in foldable connection with the two first edge portions 41 of the second insulating part 43 in the first direction Y, facilitating the foldable parts 41 being folded relative to the second insulating part 43 to avoid that the two foldable parts 41 interfere with each other during folding.

Referring to FIG. 7 to FIG. 10, in some embodiments, the first insulating member 30 includes two first partition portions 31, the two first partition portions 31 are in foldable connection with the two foldable parts 41 respectively, the first ends 411 of the foldable parts 41 are in foldable connection with the second insulating part 43, and the second ends 412 of the foldable parts 41 opposite to the first ends 411 are in foldable connection with the first partition portions 31.

In this embodiment, the first partition portion 31 is in foldable connection with the second end 412 of the foldable part 41, so that the first partition portion 31 can be rotated and folded around a certain fold, relative to the foldable part 41. In this embodiment, in the second direction Z, two ends of the second insulating part 43 may be flush with or not flush with two ends of the foldable part 41. Exemplarily, as shown in FIG. 7 to FIG. 10, in the second direction Z, two ends of the second insulating part 43 are not flush with each other, and the two ends of the second insulating part 43 extend beyond the two ends of the foldable part 41.

A third fold 434 is formed at the connection position of the first partition portion 31 and the foldable part 41, and the third fold 434 extends in the second direction Z.

The first fold 34, the second fold 42 and the third fold 434 are formed before folding, so that the folding positions can be clearly and accurately known, making the folding easier. The foldable part 41 may be folded around the first fold 34, relative to the second insulating part 43, the first partition portion 31 may be folded around the second fold 42, relative to the foldable part 41, and the first fold 34 and the second fold 42 extend in the same direction, which can prevent that the folding action of the foldable part 41 relative to the first insulating part 32 and the folding action of the first partition portion 31 relative to the foldable part 41 from interfering with each other.

The first insulating member 30 includes two first partition portions 31 that are in foldable connection with the two foldable parts 41 respectively, and the first partition portions 31 and the second insulating part 43 are respectively connected to the second end 412 and the first end 411, opposite to each other, of each of the foldable parts 41, facilitating the first partition portions 31 being folded relative to the foldable parts 41 to separate the first side surfaces 222 of the electrode assembly 22 from the casing 21.

Certainly, the foldable parts 41 and the first partition portions 31 may be arranged in other ways. For example, as shown in FIG. 13, in other embodiments, the second insulating member 40 includes two foldable parts 41, the second insulating part 43 has two first edge portions 433 arranged opposite to each other in the first direction Y, and two foldable parts 41 are in foldable connection the two first edge portions respectively; the second insulating part 43 has two second edge portions 435 arranged opposite to each other in the second direction Z, the first insulating member 30 includes two first partition portions 31, the two first partition portions 31 are in foldable connection with the two second edge portions 435 respectively, and the first direction Y is perpendicular to the second direction Z.

The two foldable parts 41 are respectively in foldable connection with the two opposite first edge portions 433 of the second insulating part 43 in the first direction Y, and the first fold 34 formed at the connection position of each foldable part 41 and the corresponding first edge portion 433 extends in the second direction Z. The two first partition portions 31 are respectively connected to the two second edge portions 435 of the second insulating part 43 opposite to each other in the second direction Z, a fourth fold 436 is formed at the connection position of each first partition portion 31 and the corresponding second edge portion 435, and when the second insulating member 40 is in the unfolded state, the fourth fold 436 extends in the first direction Y.

The two first partition portions 31 are respectively in foldable connection with the two second edge portions 435 of the second insulating part 43 opposite to each other in the second direction Z, and the two foldable parts 41 are respectively in foldable connection with the two first edge portions 433 of the second insulating part 43 opposite to each other in the first direction Y, which can reduce the difficulty of folding the foldable parts 41 and reduce the risk that the foldable portions 41 and the first partition portions 31 interfere with each other during folding.

During the process of assembling the battery cell 20, in order to facilitate the assembly of the battery cell 20, the second insulating member 40 is provided with through holes 437. The through holes 437 are used to realize cooperative positioning with the assembly device 2200 for assembling the battery cell 20, thereby positioning the first insulating member 30 on the assembly device 2200 to improve the assembly quality. However, ions from the electrode assembly 22 will reach the casing 21 through the through holes 437, resulting in a short circuit inside the battery cell 20, causing safety issues.

Based on this, as shown in FIG. 13, in some embodiments, the second insulating part 43 is provided with the through holes 437, and the foldable parts 41 are configured to be stacked with the second insulating part 43 to cover the through holes 437.

The foldable parts 41 cover the through holes 437, preventing the possibility that the ions of the electrode assembly 22 reach the casing 21 through the through holes 437. In the case where there are a plurality of foldable parts 41, the plurality of foldable parts 41 are distributed at two sides of the third direction, and can cover the through holes 437 from the two ends of each through hole in the axial direction, to further prevent the ions of the electrode assembly 22 from reaching the casing 21 through the through holes 437.

During the process of assembling the battery cell 20, the second insulating member 40 may be positioned through the through holes 437 to realize cooperative positioning with the assembly device 2200 for assembling the battery cell 20, thereby positioning the second insulating member 40 on the assembly device 2200 to improve the assembly quality of the battery cell 20. When the foldable part 41 is in a stacked state relative to the second insulating part 43, the foldable part 41 can cover the through hole 437, so that ions of the electrode assembly 22 cannot reach the casing 21 through the through hole 437, thereby reducing the risk of short circuit inside the battery cell 20.

In some embodiments, the first insulating member 30 and the second insulating member 40 are integrally formed.

In other embodiments, the first insulating member 30 and the second insulating member 40 may also be provided separately and then connected into an integral structure.

The first insulating member 30 and the second insulating member 40 are integrally formed, facilitating manufacturing.

In some embodiments, the thickness of the second insulating member 40 is greater than the thickness of the first insulating member 30.

The thickness of the second insulating member 40 is greater than the thickness of the first partition portion 31 of the first insulating member 30, and the thickness of the second insulating member 40 is greater than the thickness of the second partition portion 33 of the first insulating member 30.

The thickness of the second insulating member 40 is greater than the thickness of the first insulating member 30, which can both avoid interfering between the electrode plate of the electrode assembly 22 and the first circular arc transition surface 214 which causes wrinkling of the electrode plate of the electrode assembly 22, and reduce the space inside the casing 21 occupied by the first insulating member 30.

Embodiments of the present application further provide a battery 100, the battery 100 including at least one battery cell 20 provided by the above embodiments.

For the battery cell 20 in the embodiments above, the risk that the electrode plate of the electrode assembly 22 interferes with the first circular arc transition surface 214 to cause wrinkling of the electrode plate and thereby short circuit of the battery cell 20 is relatively low, and the safety performance of the battery cell 20 is high, thereby improving the safety performance of the battery 100.

Embodiments of the present application further provide an electric device, the electric device including at least one battery cell 20 provided by the above embodiments.

For the battery cell 20 in any embodiment above, the risk that the electrode plate of the electrode assembly 22 interferes with the first circular arc transition surface 214 to cause wrinkling of the electrode plate and thereby short circuit of the battery cell 20 is relatively low, and the safety performance of the battery cell 20 is high, thereby improving the electrical safety of the electric device.

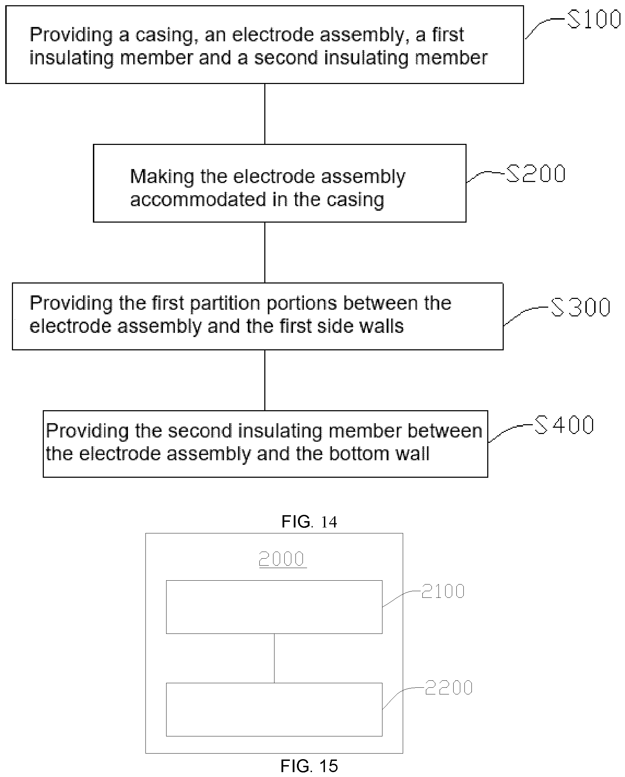

As shown in FIG. 14, embodiments of the present application further provide a manufacturing method for a battery cell 20, the manufacturing method for a battery cell 20 includes:

S100, providing a casing 21, an electrode assembly 22, a first insulating member 30 and a second insulating member 40, where the casing 21 includes a bottom wall 212 and first side walls 213 connected to the bottom wall 212, the inner surface of the bottom wall 212 is connected with the inner surface of each first side wall 213 by a first circular arc transition surface 214, the electrode assembly 22 includes electrode plates and a separator, and the first insulating member 30 includes first partition portions 31;

S200, making the electrode assembly 22 accommodated in the casing 21;

S300, providing the first partition portions 31 between the electrode assembly 22 and the first side walls 213, to separate the electrode assembly 22 from the first side walls 213; and

S400, providing the second insulating member 40 between the electrode assembly 22 and the bottom wall 212, to separate the electrode assembly 22 from the bottom wall 212,

wherein in the thickness direction of the second insulating member, the separator has a stacked part 221 located between the electrode plate and the second insulating member 40; and

the radius R1 of the first circular arc transition surface 214, the thickness a1 of the first partition portion 31, the thickness b of the stacked part 221, and the thickness c of the second insulating member 40 satisfy the following relationship:

$$R1 \leq (c+b)^2 + 4*(a1)^2 + [(a1)*(c+b)]^{1/2}.$$

.

As shown in FIG. 15, embodiments of the present application further provide a battery cell manufacturing device 2000. The battery cell manufacturing device 2000 includes a providing device 2100 and an assembly device 2200. The providing device 2100 is configured to provide a casing 21, an electrode assembly 22, a first insulating member 30, and a second insulating member 40, where the casing 21 includes a bottom wall 212 and first side walls 213 connected to the bottom wall 212, the inner surface of the bottom wall 212 is connected with the inner surface of each of the first side walls 213 through a first circular arc transition surface 214; the electrode assembly 22 includes electrode plates and a separator; the first insulating member 30 includes first partition portions 31; the assembly device 2200 is configured to make the electrode assembly 22 accommodated in the casing 21, provide the first partition portions 31 between the electrode assembly 22 and the first side walls 213 to separate the electrode assembly 22 from the first side walls 213, and provide the second insulating member 40 between the electrode assembly 22 and the bottom wall 212 to separate the electrode assembly 22 from the bottom wall 212, wherein in the thickness direction X of the second insulating member, the separator has a stacked part 221 located between the electrode plate and the second insulating member 40, and the radius R1 of the first circular arc transition surface 214, the thickness a1 of the first partition portion 31, the thickness b of the stacked part 221, and the thickness c of the second insulating member 40 satisfy the following relationship:

$$R1 \leq (c+b)^2 + 4*(a1)^2 + [(a1)*(c+b)]^{1/2}.$$

Embodiments of the present application provides a battery cell 20, where the battery cell 20 includes a casing 21, an electrode assembly 22, a first insulating member 30 and a second insulating member 40. The casing 21 includes a bottom wall 212, two first side walls 213 and two second side walls 215. The two first side walls 213 are arranged oppositely in the first direction Y, and the two second side walls 215 are arranged oppositely in the second direction Z, and the first direction Y is perpendicular to the second direction Z. The inner surface of each first side wall 213 is connected with the inner surface of the bottom wall 212 by the first circular arc transition surface 214, and the radius of the first circular arc transition surface 214 is R1. The inner surface of each second side wall 215 is connected with the inner surface of the bottom wall 212 by the second circular arc transition surface 216, and the radius of the second circular arc transition surface 216 is R2. The first insulating member 30 includes two first partition portions 31 and four first insulating parts 32, and the two first partition portions 31 are used to separate the electrode assembly 22 from the two first side walls 213 respectively. Two first insulating parts 32 of the four first insulating parts 32 are in foldable connection with two ends of one first partition portion 31 in the second direction Z, and the other two first insulating parts 32 of the four first insulating parts 32 are in foldable connection with two ends of the other first partition portion 31 in the second direction Z. The first insulating parts 32, located at the same ends, of the two first partition portions 31 are stacked in the second direction Z, to form the second partition portion 33 for separating the second side wall 215. The thickness of the first partition portion 31 is a1, and the thickness of the first insulating part 32 is a21. The second insulating member 40 includes a second insulating part 43 and two foldable parts 41. Both of the two foldable parts 41 are in foldable connection with the second insulating part 43. The two foldable parts 41 are stacked at two opposite sides of the second insulating part 43 in the thickness direction X of the second insulating member, and the thickness c of the second insulating part 43 is the sum of the thickness of the second insulating part 43 and the thicknesses of the two foldable parts 41. In the above, $R1 \leq (c+b)^2 + 4*(a1)^2 + [(a1)*(c+b)]^{1/2}$.

$R2 \leq (c+b)^2 + 4(2*a21)^2 + [(2*a21)*(c+b)]^{1/2}$, preventing the electrode plate of the electrode assembly 22 from interfering with the first circular arc transition surface 214 and the second circular arc transition surface 216 which results in wrinkling of the electrode plate of the electrode assembly 22, and thus reducing the risk that the interfering and squeezing between the electrode plate and the first circular arc transition surface 214 and the second circular arc transition surface 216 cause wrinkling of the electrode plate and thereby the short circuit of the battery cell 20, improving the safety performance of the battery cell 20.

The above are only preferred embodiments of the present application, and are not intended to limit the present application. For those skilled in the art, there may be various modifications and changes in the present application. Any modifications, equivalent replacements, improvements, etc. made within the spirits and principles of the present application shall be included within the protection scope of the present application.

## Claims

1. A battery cell, comprising:

a casing, comprising a bottom wall and first side walls connected with the bottom wall, wherein an inner surface of the bottom wall is connected with an inner surface of each of the first side walls by a first circular arc transition surface;

an electrode assembly, accommodated in the casing, wherein the electrode assembly comprises electrode plates and a separator;

a first insulating member, comprising first partition portions configured to separate the electrode assembly from the first side walls; and

a second insulating member configured for separating the electrode assembly from the bottom wall,

wherein in a thickness direction of the second insulating member, the separator has a stacked part located between the electrode plate and the second insulating member; and

a radius R1 of the first circular arc transition surface, a thickness a1 of each of the first partition portions, a thickness b of the stacked part, and a thickness c of the second insulating member satisfy following relationship:

$$R1 \leq (c+b)^2 + 4*(a1)^2 + [(a1)*(c+b)]^{1/2}.$$

2. The battery cell according to claim 1, wherein the casing comprises two first side walls arranged opposite to each other in a first direction, the first insulating member comprises two first partition portions arranged opposite to each other in the first direction, each of the first partition portions is configured to separate the electrode assembly from one of the first side walls, and a thickness direction of the second insulating member is perpendicular to the first direction.

3. The battery cell according to claim 1 or 2, wherein the casing further comprises second side walls connected with the bottom wall and adjacent to the first side walls, and the inner surface of the bottom wall is connected with an inner surface of each of the second side walls by a second circular arc transition surface; and

the first insulating member further comprises two first insulating parts, and the two first insulating parts at least partially overlap to separate the second side walls from the electrode assembly,
wherein a radius R2 of the second circular arc transition surface, a thickness a21 of each of the first insulating parts, the thickness b of the stacked part, and the thickness c of the second insulating member satisfy following relationship:

$$R2 \leq (c+b)^2 + 4*(2*a21)^2 + [(2*a21)*(c+b)]^{1/2}.$$

4. The battery cell according to claim 3, wherein the two first insulating parts at least partially overlap to form a second partition portion configured to separate the second side wall from the electrode assembly, and the first insulating member has two second partition portions; and
the casing comprises two second side walls arranged opposite to each other in a second direction, and the electrode assembly and each of the second side walls are separated by one of the second partition portions, and a thickness direction of the second insulating member is perpendicular to the second direction.

5. The battery cell according to any one of claims 1 to 4, wherein the radius R1 of the first circular arc transition surface and the thickness c of the second insulating member satisfy: $0.3 \leq c/R1 \leq 1$, and preferably, $0.35 \leq c/R1 \leq 0.8$.

6. The battery cell according to any one of claims 1 to 5, wherein the second insulating member comprises a second insulating part and at least one foldable part that are stacked in a third direction, the at least one foldable part is in foldable connection with the second insulating part, and the third direction is consistent with a thickness direction of the second insulating member.

7. The battery cell according to claim 6, wherein the second insulating member comprises a plurality of foldable parts.

8. The battery cell according to claim 7, wherein in the third direction, some of the plurality of foldable parts are located at one side of the second insulating part, and the others of the plurality of foldable parts are located at the other side of the second insulating part.

9. The battery cell according to claim 6, wherein the second insulating member comprises two foldable parts, the second insulating part has two first edge portions opposite to each other in the first direction, one ends of the two foldable parts are in foldable connection with the two first edge portion respectively, and the first direction is perpendicular to the thickness direction of the second insulating member.

10. The battery cell according to claim 9, wherein the first insulating member comprises two first partition portions, the two first partition portions are in foldable connection with the two foldable parts respectively, first ends of the foldable parts are in foldable connection with the second insulating part, and second ends of the foldable parts opposite to the first ends are in foldable connection with the first partition potions.

11. The battery cell according to claim 6, wherein the second insulating member comprises two foldable parts, the second insulating part has two first edge portions opposite to each other in the first direction, and the two foldable parts are in foldable connection with two first edge portions respectively; and
the second insulating part has two second edge portions arranged opposite to each other in the second direction, the first insulating member comprises two first partition portions, the two first partition portions are in foldable connection with the two second edge portions respectively, and the first direction is perpendicular to the second direction.

12. The battery cell according to any one of claims 6 to 11, wherein the second insulating part is provided with through holes, and the foldable parts are configured to be stacked with the second insulating part to cover the through holes.

13. The battery cell according to any one of claims 1 to 12, wherein the first insulating member and the second insulating member are integrally formed.

14. The battery cell according to claim 13, wherein the thickness of the second insulating member is greater than the thickness of the first insulating member.

15. A battery, comprising at least one battery cell each according to any one of claims 1 to 14.

16. An electric device, comprising at least one battery cell according to any one of claims 1 to 14.

1000

FIG. 1

100

FIG. 2

20

233

231

232

23

232

25

II

22

222

30

25

I

II

31

223

32

33

32

21

213

211

215

24

X

Z

Y

FIG. 3

FIG. 4

FIG. 5

21

213

215

211

215

212

FIG. 6

412(434)

34

32

31

41

34

411(433)(42)

437

411(433)(42)

32

32

412

437

34

40

43

41

412(434)

31

30

32

34

FIG. 7

FIG. 8

FIG. 9

FIG. 10

FIG. 11

FIG. 12

FIG. 13

Providing a casing, an electrode assembly, a first insulating member and a second insulating member —S100

Making the electrode assembly accommodated in the casing —S200

Providing the first partition portions between the electrode assembly and the first side walls —S300

Providing the second insulating member between the electrode assembly and the bottom wall —S400

FIG. 14

2000

2100

2200

FIG. 15

## INTERNATIONAL SEARCH REPORT

| | |
|---|---|
| International application No. | **PCT/CN2022/086391** |

**A. CLASSIFICATION OF SUBJECT MATTER**

H01M 10/04(2006.01)i; H01M 50/107(2021.01)n; H01M 50/586(2021.01)n; H01M 50/593(2021.01)n

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 电池, 单体, 壳, 绝缘, 底, 侧, 面, 过渡, 圆, 弧, 半径, 厚度, battery, cell, cover, insulation, base, back, lower, subface, surface, basal, side, transition, arc, radius, thickness

**C. DOCUMENTS CONSIDERED TO BE RELEVANT**

| Category* | Citation of document, with indication, where appropriate, of the relevant passages | Relevant to claim No. |
|---|---|---|
| X | JP 2015015217 A (TOYOTA INDUSTRIES CORP.) 22 January 2015 (2015-01-22) description, paragraphs 17-55, and figures 1-5 | 1-16 |
| X | CN 209592090 U (NINGDE CONTEMPORARY AMPEREX TECHNOLOGY CO., LTD.) 05 November 2019 (2019-11-05) description, paragraphs 48-72, and figures 1-7 | 1-16 |
| A | JP 2018142512 A (TOYOTA INDUSTRIES CORP.) 13 September 2018 (2018-09-13) entire document | 1-16 |
| A | JP 2015032386 A (TOYOTA INDUSTRIES CORP.) 16 February 2015 (2015-02-16) entire document | 1-16 |
| A | WO 2018180475 A1 (KABUSHIKI KAISHA TOYOTA JIDOSHOKKI) 04 October 2018 (2018-10-04) entire document | 1-16 |
| A | CN 110337749 A (TOYOTA INDUSTRIES CORP.) 15 October 2019 (2019-10-15) entire document | 1-16 |

☐ Further documents are listed in the continuation of Box C.  ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **14 November 2022** | **25 November 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/086391**

| Patent document cited in search report | | | Publication date (day/month/year) | Patent family member(s) | | | Publication date (day/month/year) |
|---|---|---|---|---|---|---|---|
| JP | 2015015217 | A | 22 January 2015 | None | | | |
| CN | 209592090 | U | 05 November 2019 | None | | | |
| JP | 2018142512 | A | 13 September 2018 | None | | | |
| JP | 2015032386 | A | 16 February 2015 | None | | | |
| WO | 2018180475 | A1 | 04 October 2018 | JP | 2018163817 | A | 18 October 2018 |
| CN | 110337749 | A | 15 October 2019 | JP | WO2018159266 | A1 | 09 January 2020 |
| | | | | US | 2020066464 | A1 | 27 February 2020 |
| | | | | WO | 2018159266 | A1 | 07 September 2018 |

Form PCT/ISA/210 (patent family annex) (January 2015)